(19) Europäisches Patentamt
European Patent Office
Office européen des brevets

(11) **EP 3 637 856 B1**

(12) **EUROPEAN PATENT SPECIFICATION**

(45) Date of publication and mention
of the grant of the patent:
**21.07.2021 Bulletin 2021/29**

(51) Int Cl.:
***H04W 36/30*** *(2009.01)*          ***H04W 36/38*** *(2009.01)*
*H04W 36/08* *(2009.01)*

(21) Application number: **18814252.5**

(22) Date of filing: **23.04.2018**

(86) International application number:
**PCT/CN2018/084005**

(87) International publication number:
**WO 2018/223783 (13.12.2018 Gazette 2018/50)**

(54) **WIRELESS COMMUNICATION METHOD AND WIRELESS COMMUNICATION DEVICE**

DRAHTLOSKOMMUNIKATIONSVERFAHREN UND
DRAHTLOSKOMMUNIKATIONSVORRICHTUNG

PROCÉDÉ ET DISPOSITIF DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2017 CN 201710422338**

(43) Date of publication of application:
**15.04.2020 Bulletin 2020/16**

(73) Proprietor: **Sony Corporation
Tokyo 108-0075 (JP)**

(72) Inventors:
• **ZHANG, Yuan
Nanjing
Jiangsu 210000 (CN)**
• **LV, Pen-Shun
Beijing 100028 (CN)**

(74) Representative: **D Young & Co LLP
120 Holborn
London EC1N 2DY (GB)**

(56) References cited:
**EP-A1- 1 740 007          WO-A1-2017/074230
WO-A2-97/31487          CN-A- 101 106 819
CN-A- 104 412 654          CN-A- 106 134 236
CN-A- 106 465 217          US-A1- 2016 270 018
US-B1- 6 321 089**

## Description

### FIELD

The present disclosure relates to a wireless communication method and a wireless communication device, and in particular to a method and a communication device for performing handover based on uplink measurement in a mobile communication system.

### BACKGROUND

Handover is an important operation in the mobile communication system. For the future cellular system, it has put forward higher requirement for delay, signaling overhead and energy efficiency during a handover process. Therefore, the third generation partnership project (3GPP) has considered to introduce a handover process based on uplink measurement in the cellular system.

In the conventional cellular system, handover is generally performed based on downlink measurement. Specifically, user equipment receives downlink reference signals transmitted from respective base stations, and measures reception quality for the down reference signals. If it is detected that the measurement result for a source base station (that is, a base station currently providing service for the user equipment) becomes worse, while the measurement result for a certain neighbor base station (that is, a target base station) becomes better, the user equipment reports the measurement results to the source base station. The source base station determines, based on the received measurement results, whether the user equipment should perform handover and which base station is a target base station for the handover, thereby performing the handover process.

Unlike the handover performed based on downlink measurement, in a handover process based on uplink measurement, the user equipment transmits uplink reference signals, and the base stations receive the uplink reference signals and measure reception quality for the uplink reference signals. From an angle of the system, when the measurement result of the source base station is worse than a measurement result of a certain candidate target base station, the user equipment should be handover to a target base station with a better measurement result. However, since the measurement results are distributed among respective base stations during the uplink measurement-based handover process, it is difficult for the source base station to obtain the measurement results of the candidate target base stations, and thus it is difficult to perform handover decision.

If the future cellular system is in central control mode (that is, all the base stations are controlled by a certain background center), the above problem may be solved easily. For example, since the background center may obtain information from all base stations, handover decision can be performed. However, in a case that the cellular system includes movable cells, the above problem becomes more prominent. This is mainly because that the movable cells may be deployed in a scenario without the background center or a scenario in which the background center is damaged. In these scenarios, no network entity can obtain information from all the base stations, and thus handover decision cannot be performed.

Therefore, it is expected to provide a solution for effectively performing handover based on uplink measurement in the scenario without the background control center. Prior art is described in EP1740007, WO97/31487, US6321089 and WO2017/074230.

### SUMMARY

According to an aspect of the present disclosure, a communication method according to claim 1 performed by a base station is provided. According to an aspect of the present disclosure, a communication method according to claim 6 is provided.

According to another aspect of the present disclosure, a communication method according to claim 11 performed by a base station is provided.

According to another aspect of the present disclosure, a base station is provided, which includes a processing circuitry configured to perform the communication method of any of claims 1 and 6.

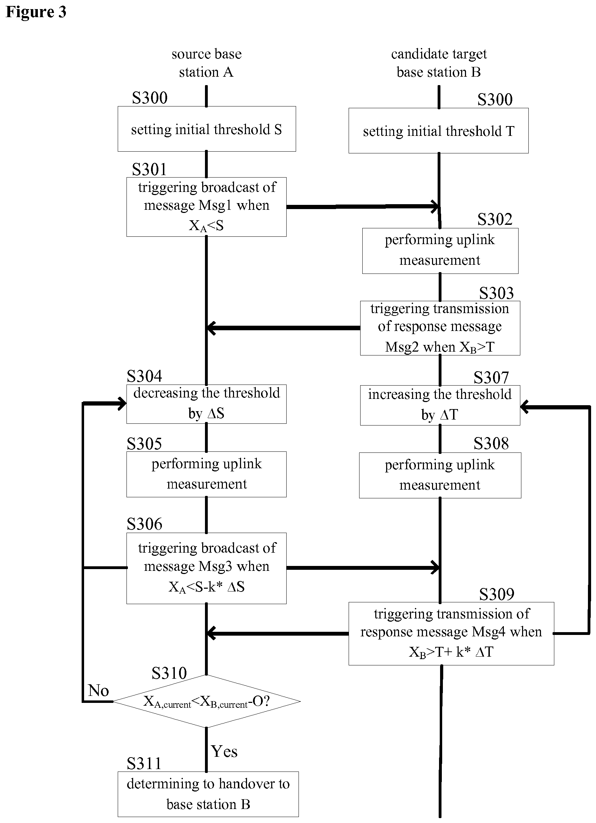

In particular, the present invention is based on the embodiments disclosed below with reference to Figures 3-4 and 7-8. Additional embodiments, aspects and examples disclosed below are for illustrative purposes.

According to another unclaimed aspect, a computer-readable recording medium storing a program is provided, and the program, when being executed, causes a computer to execute the communication method described above.

### BRIEF DESCRIPTION OF THE DRAWINGS

The present disclosure may be understood better with reference to the description below made in conjunction with the drawings. Throughout all the drawings, the same or similar reference numeral indicates the same or similar component. The drawings together with the following detailed illustration are included in the specification and form a part of the specification, and are used to further illustrate preferred embodiments of the present disclosure and explain principles and advantages of the present disclosure. In the drawings:

Figure 1 schematically shows a scenario of handover based on uplink measurement;

Figure 2 shows a signaling flow of a handover process based on uplink measurement;

Figure 3 shows a signaling interaction flow for performing handover decision according to a first embodiment of the present disclosure;

Figure 4 shows a curve indicating change of measurement results of base station A and base station B and corresponding signaling interaction according to the first embodiment of the present disclosure;

Figure 5 shows a signaling interaction flow for performing handover decision according to a second embodiment of the present disclosure;

Figure 6 shows a curve indicating change of measurement results of base station A and base station B and corresponding signaling interaction according to the second embodiment of the present disclosure;

Figure 7 shows a signaling interaction flow for performing handover decision according to a third embodiment of the present disclosure;

Figure 8 shows a curve indicating change of measurement results of base station A and base station B and corresponding signaling interaction according to the third embodiment of the present disclosure;

Figure 9 shows a block diagram of a schematic configuration of an eNB, as an example of base station;

Figure 10 shows a block diagram of a schematic configuration of a smartphone, as an example of user equipment; and

Figure 11 shows a block diagram of a schematic configuration of computer hardware.

## DETAILED DESCRIPTION

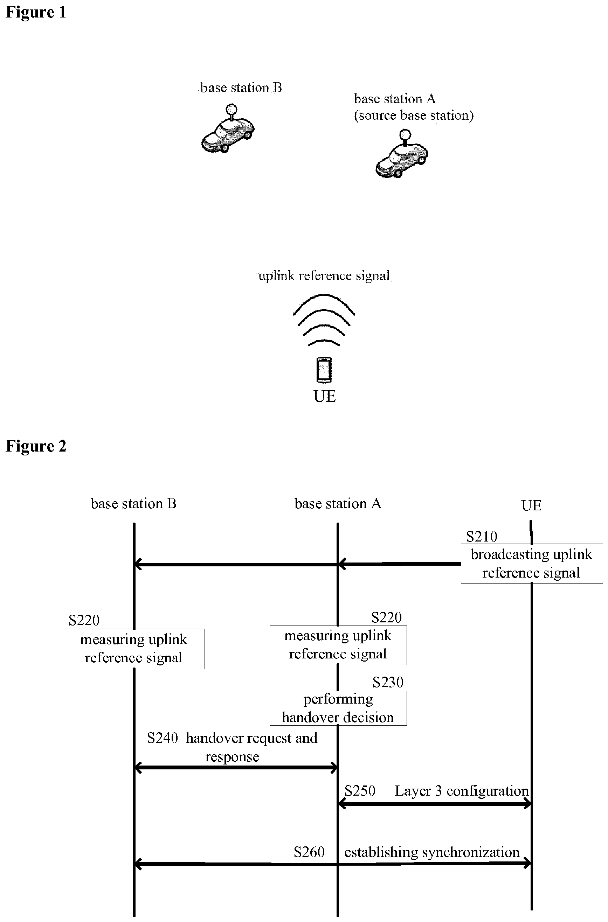

Figure 1 shows a scenario of handover based on uplink measurement. As shown in Figure 1, a communication system includes user equipment UE and two neighbor base stations A and B. The base station A is a base station currently providing service for the user equipment UE, that is, a source base station. As shown in Figure 1, the base stations A and B may be, for example, mobile base stations installed on a vehicle, which are not limited in the present disclosure. Solutions of the present disclosure also adapt to a case that the base stations A and B are fixed base stations. That is, for a movable cell described above (without a background control center), the problem of performing handover decision by the source base station can be solved according to the present disclosure; in addition, for a fixed cell (with a background control center), the solutions of the present disclosure are also applicable.

In Figure 1, the user equipment UE transmits an uplink reference signal, the base station A and the base station B each receive the uplink reference signal and measure a reception quality of the uplink reference signal. For ease of description, a measurement result of the mobile base station A is indicated by $X_A$, and a measurement result of the mobile terminal B is indicated by $X_B$. From an angle of the communication system, it is expected that in a case that the signal reception quality measured by the base station A is lower than the signal reception quality measured by the base station B by a certain amount, that is, when $X_A < X_B - O$ is met, the base station A performs handover decision to instruct the user equipment UE to handover to the target base station B. Herein, O represents a preset threshold, and the threshold may be set based on at least one of radius of a cell, transmission power, electromagnetic wave propagation environment, requirement on signal to interference ratio, and experience and preference of an operator.

Figure 2 shows a signaling flow of a handover process. As shown in Figure 2, the user equipment UE transmits (for example, broadcasts) an uplink reference signal in step S210. The base station A and the base station B each measure reception quality for the received uplink reference signal, for example, power of the received signal, in step S220. Then, the source base station A manages to perform handover decision in step S230. In a case that the source base station A determines that the user equipment UE should handover to the target base station B, the source base station A and the target base station B exchange signaling with each other, and perform handover request and response in step S240. Then, the source base station A and the user equipment UE exchange signaling to perform layer-3 configuration in step S250. Then, the user equipment UE manages to synchronize with the target base station B in step S260, and accordingly communicates with the target base station B. With the above process, the user equipment UE handovers from the source base station A to the target base station B.

It follows from Figure 2 that, the handover decision performed by the source base station A in step S230 is important, and details are described in the following.

Figure 3 shows a signaling interaction flow for performing handover decision according to a first embodiment of the present disclosure.

Reference is made to Figure 3. First, in step S300, the source base station A sets an initial threshold S, and a candidate target base station B also sets an initial threshold T. The thresholds S and T may be set based on radius of a cell, transmission power, electromagnetic wave propagation environment and requirement on signal to interference ratio and the like. In a case that a measurement result $X_A$ for an uplink reference signal transmitted to user equipment from the source base station A is lower than the initial threshold S, that is, when $X_A < S$, the source base station A triggers broadcast of an initial message Msg1 containing its measurement result to all candidate target base stations in step S301. The initial message Msg1 is used to indicate all candidate target base stations that a communication quality of the source base station A reduces, and to instruct each candidate target base station to perform uplink measurement, thereby facilitating preparing for possible handover. It should be understood by those skilled in the art that an actual communication system generally includes multiple candidate target base stations, and the measurement result of the source base station A is notified to each candidate target base station through the message Msg1. In the specification, only the base station B is schematically shown as representative of the candidate target base stations in the figure and other candidate target base stations are omitted for clarity.

After receiving the message Msg1 from the source base station A, the candidate target base station B performs uplink measurement in step S302. In a case that a measurement result $X_B$ of the base station B is higher than the initial threshold T, that is, when $X_B > T$, the base station B triggers transmission of a response message Msg2 containing its measurement result to the source base station A in step S303.

The source base station A decreases its threshold by $\Delta S$ after each triggering. Therefore, the source base station A decreases its threshold by $\Delta S$ after transmission of the message Msg1, as shown in step S304. Since the user equipment periodically transmits the uplink reference signal, the source base station A periodically performs the uplink measurement. Based on this, the source base station A performs the uplink measurement after decreasing the threshold by $\Delta S$, as shown in step S305. In a case that the source base station A detects that the current measurement result is lower than the current threshold, that is, when $X_A < S - \Delta S$, the source base station A triggers broadcast of a message Msg3 containing the current measurement result to all candidate target base stations in step S306. Then, the source base station A decreases the threshold by $\Delta S$ again, and the decreased threshold becomes $S - 2*\Delta S$. Then, the source base station A performs operations of steps S305 to S306. It follows that, the source base station A decreases the threshold by $\Delta S$ and detects that the current measurement result is lower than the decreased threshold (that is, $S - k*\Delta S$, k=1, 2, 3...), thus the source base station A triggers transmission of the message Msg3 and then decreases the threshold by $\Delta S$ again. The above process may be repeated for multiple times.

In another aspect, the candidate target base station B increases the threshold by $\Delta T$ after each triggering. Therefore, the base station B increases its threshold by $\Delta T$ after transmission of the response message Msg2, as shown in step S307. Similar to the source base station A, the base station B also periodically performs the uplink measurement. Therefore, the base station B performs the uplink measurement after increasing the threshold by $\Delta T$, as shown in step S308. In a case that the base station B detects that the current measurement result is higher than the current threshold, that is, when $X_B > T + \Delta T$, the base station B triggers transmission of a response message Msg4 containing the current measurement result to the source base station A in step S309. Then, the base station B increases the threshold by $\Delta T$, the increased threshold becomes $T + 2*\Delta T$. Then, the base station B performs operations of steps S308 to S309. It follows that, similar to operations of the source base station A, the candidate target base station B increases the threshold by $\Delta T$ and detects that the current measurement result is higher than the increased threshold (that is, $T + k*\Delta T$, k=1, 2, 3...), thus the base station B triggers transmission of the response message Mgs4 and then increases the threshold by $\Delta T$ again. The above process may be repeated for multiple times.

The parameters $\Delta S$ and $\Delta T$ may be set by the base station based on a speed of the user equipment. In addition, it should be noted that, although step S306 in which the source base station A transmits the message Msg3 is before step S309 in which the candidate target base station B transmits the response message Msg4 in Figure 3, an order for performing step S306 and S309 is not limited. Since the base station A and the base station B independently perform uplink measurement and triggering, step 306 and step 309 may be performed simultaneously or in an order opposite to that shown in Figure 3.

On receipt of the response message Msg4 from the candidate target base station B, the source base station A compares its current measurement result with the measurement result of the base station B included in the received response message Msg4, as shown in step S310. If the measurement result included in the response message Msg4 is higher than the current measurement result of the source base station A by a threshold O, the source base station A performs a handover decision and determines that the user equipment should handover to the base station B, as shown in step S311. In contrast, if the measurement result contained in the response message Msg4 is not higher the current measurement result of the source base station A by the threshold O, the source base station A performs operations of steps S304 to S306 continuously.

It should be noted that, operations of the candidate target base station are shown in Figure 3 only taking the base station B as an example. If in step S310, the source base station A determines that each of measurement results contained in multiple response messages Msg4 from multiple candidate target base stations is higher than the current measurement result of the source base station A by the threshold O, the source base station A selects an optimal base station from the multiple candidate target base stations satisfying the condition as a handover target base station, based on energy, capacity, speed and the like of the candidate target base stations.

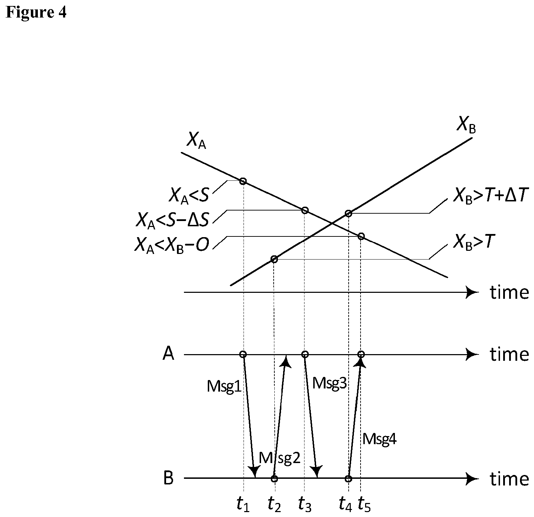

Figure 4 schematically shows a curve indicating change of signal reception quality measured by the base station A and the base station B and corresponding signaling interaction according to a first embodiment of the present disclosure. As shown in Figure 4, $X_A$ and $X_B$ respectively indicate change of uplink reference signal reception quality measured by the base station A and the base station B over time. For the purpose of clarity, $X_A$ and $X_B$ are shown as lines, while they are typically curves in practice.

At time $t_1$, the reception quality $X_A$ measured by the base station A is lower than the initial threshold S, and the base station A transmits the message Msg1. At time $t_2$, the measurement result $X_B$ of the base station B is higher than the initial threshold T, and the base station B transmits the response message Msg2 to the base station A. At time $t_3$, the base station A decreases the threshold and the measurement result $X_A$ is less than the decreased threshold S-$\Delta$S, and the base station A therefore transmits the message Msg3 to the base station B. At time $t_4$, the base station B increases the threshold and the measurement result $X_B$ is greater than T+$\Delta$T, and therefore the base station B transmits the response message Msg4. At time $t_5$, the base station A receives the response message Msg4 from the base station B, and the base station A compares the measurement result $X_B$ of the base station B included in the response message Msg4 with the current measurement result $X_A$ of the base station A. If $X_A < X_B$-O, the base station A may performs handover decision to handover to the base station B. To illustrate the principle of the present disclosure, Figure 4 schematically shows that the base station A decreases the initial threshold one time and the base station B increases the initial threshold one time, but the actual processing may relate to multiple times of increase and decrease, as shown in Figure 3.

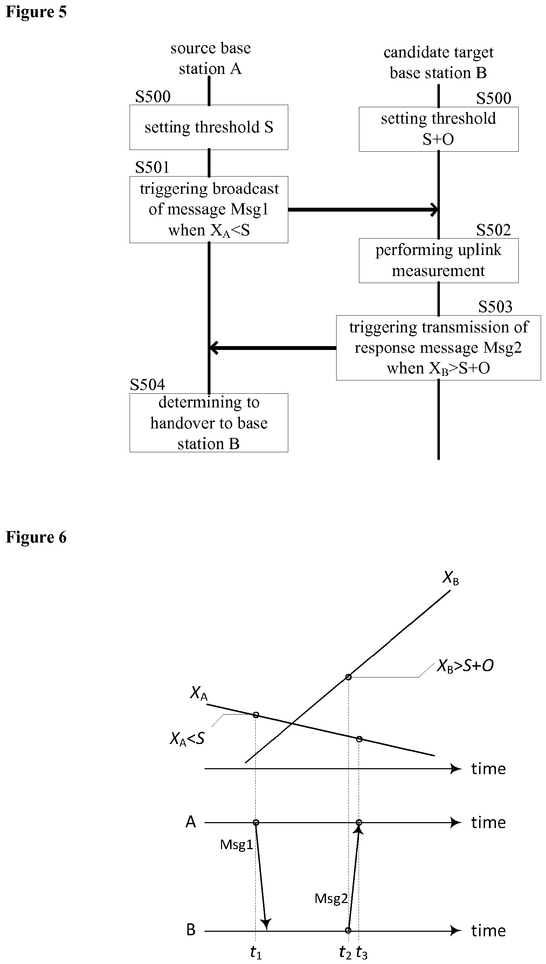

Figure 5 shows a signaling interaction flow for performing handover decision according to a second embodiment of the present disclosure. The second embodiment illustrates a simplified solution. As compared with the first embodiment, steps S304 to S306 and steps S307 to S309 are omitted. As shown in Figure 5, first, in step S500, the source base station A sets a threshold S, the candidate target base station B sets a threshold S+O. Herein, O is the same as the threshold O in the first embodiment. In a case that a downlink reference signal reception quality currently measured by the source base station A is lower than the threshold S, the source base station A triggers broadcast of an initial message Msg1 containing the current measurement result to all candidate target base stations (base station B is taken as an example in Figure 5), as shown in step S501.

The candidate target base station B performs uplink measurement after receiving the initial message Msg1 from the source base station A, as shown in step S502. In a case that the measurement result of the base station B is higher than the previously set threshold S+O, the base station B triggers transmission of the response message Msg2 containing its measurement result to the source base station A, as shown in step S503. After receiving the response message Msg2, the source base station A may perform handover decision at once, and determines that the user equipment should be handover to the base station B, as shown in step S504, since the transmission of the response message Msg2 indicates that the measurement result of the base station B is higher than the measurement result of the source base station A at least by the threshold O, thereby satisfying the handover condition. Similar to Figure 3, if the source base station A receives messages Msg2 from multiple candidate target base stations, that is, multiple candidate target base stations satisfy $X_B$>S+O, the source base station A selects an optimal base station from the multiple candidate target base stations as the handover target base station, based on energy, capacity, speed and the like of the candidate target base stations.

For the second embodiment, Figure 6 shows a curve indicating change of signal reception quality measured by the base station A and the base station B and corresponding signaling interaction. At time $t_1$, the uplink reference signal reception quality $X_A$ measured by the base station A is lower than the threshold S, and the base station A transmits the message Msg1. At time $t_2$, the measurement result $X_B$ of the base station B is higher than the threshold S+O, and the base station B transmits the response message Msg2 to the base station A. At time t3, the base station A receives the response message Msg2, and thus performs handover decision to handover to the base station B.

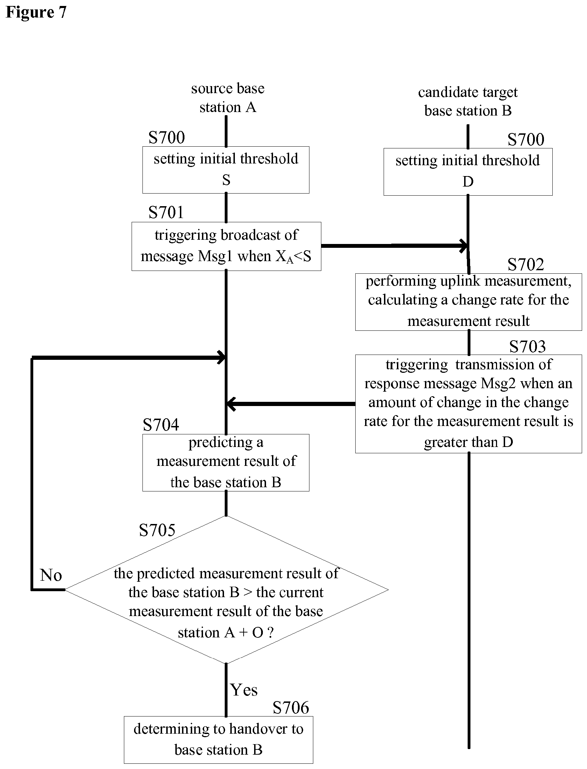

Figure 7 shows a signaling interaction flow for performing handover decision according to a third embodiment of the present disclosure.

Reference is made to Figure 7. First, in step S700, the source base station A sets the initial threshold S, and the candidate target base station B also sets an initial threshold D. The threshold S in the embodiment is the same as the threshold S in the first embodiment, and the threshold D may be set based on a speed of the user equipment by the base station B. In a case that the measurement result $X_A$ of the uplink reference signal transmitted from the source base station A to the user equipment is lower than the threshold S, that is, when $X_A <S$, the source base station A triggers broadcast of the message Msg1 containing the measurement result of the base station A to all candidate target base stations in step S701. As described above, for clarity, Figure 7 only shows the base station B as representative of the candidate target base stations, and other candidate target base stations are omitted.

After receiving the message Msg1 from the source base station A, the candidate target base station B measures the uplink reference signal from the user equipment in step S702, to obtain a measurement result, and calculates a change rate for the measurement result. The change rate dB(t) for the measurement result of the base station B at time t may be expressed by the following equation (1):

$$d_B(t)=[X_B(t)-X_B(t-\Delta t)]/\Delta t \qquad\qquad (1)$$

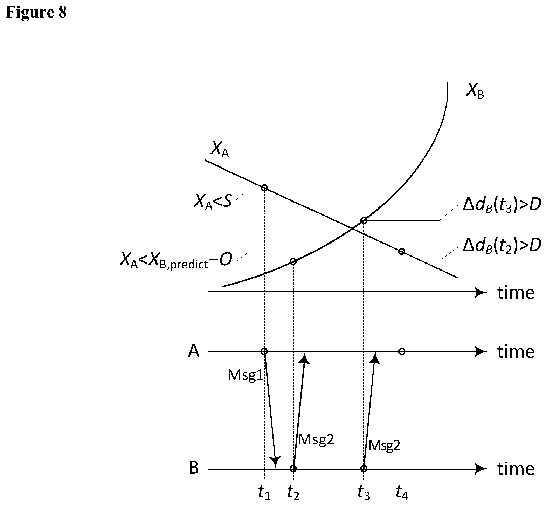

Herein, $\Delta t$ indicates a time interval, $X_B(t)$ indicates a measurement result of the base station B at time t, and $X_B(t-\Delta t)$ indicates a measurement result at time t-$\Delta t$. Reference is made to Figure 8 which shows a curve indicating change of measurement results of the base station A and the base station B. In Figure 8, the measurement result $X_B$ of the base station B is indicated as a curve. The change rate $d_B(t)$ for the measurement result indicated by the equation (1) may be understood as a derivative (or slope of a tangent line) of the curve $X_B$ at time t. It can be seen from Figure 8 that the curve $X_B$ has different slopes at different time moments. That is, the change rates dB(t) for the measurement results of the base station B obtained at different times are different from one another, rather than constant.

In a case that an amount of change in the change rate for the measurement result of the base station B is higher than the threshold D set in step S700, that is, when |dB(t)-dB(t')|>D, the base station B triggers transmission of a response message Msg2 containing the measurement result $X_B(t)$ and the change rate $d_B(t)$ for the measurement result of the base station B at time t to the source base station A, as shown in step S703. Herein, t' indicates a moment when the base station B performs the last triggering, and $d_B(t')$ indicates a change rate for the measurement result when the base station B performs the last triggering. It should be noted that, the base station B keeps performing uplink measurement after transmission of the response message Msg2. Therefore, with the lapse of time, the base station B may again detect that an amount of change in the change rate $d_B(t)$ for the measurement result is higher than the threshold D (assuming that such case occurs at time $t_i$). When detecting this case, the base station B again triggers transmission of a new response message Msg2 containing a measurement result $X_B(t_i)$ and a change rate $d_B(t_i)$ for the measurement result of the base station B at time t; to the source base station A. That is, step S703 may be performed multiple times, and the base station B may transmit the response message Msg2 multiple times.

Accordingly, the source base station A may receive multiple response messages Msg2 from the target candidate base station B. It is assumed that the latest response message Msg2 received by the source base station A contains the measurement result $X_B(t_{recent})$ and the change rate $d_B(t_{recent})$ for the measurement result at time $t_{recent}$. In this case, the source base station A predicts the measurement result of the base station B at time $t_{current}$ based on the measurement result $X_B(t_{recent})$ and the change rate dB($t_{recent}$) for the measurement result at time $t_{recent}$ included in the latest message. The time $t_{current}$ may be any moment after the source base station A receives the latest response message. The prediction may be performed based on the following equation (2):

$$X_{B.predict}(t_{current})= X_B(t_{recent})+d_B(t_{recent})*(t_{current}-t_{recent}) \qquad\qquad (2).$$

Then, the source base station A determines whether the predicted measurement result of the base station B is higher than the current measurement result (at time $t_{current}$) of the source base station A by the threshold O in step S705, that is, determining whether $X_{B.predict}(t_{current})>X_A(t_{current})+O$ is satisfied. If the above condition is satisfied, the source base station A decides that the user equipment should be handover to the target base station B, as shown in step S706. If the above condition is not satisfied, the source base station A performs operations before S704, that is, waits to receive the response message Msg2 from the base station B again. As described above, Figure 7 shows only one candidate target base station B, and there are multiple candidate target base stations actually. If the source base station A determines in step S705 that $X_{B.predict}(t_{current})>X_A(t_{current})+O$ is satisfied for multiple candidate target base stations B, the source base station A selects an optimal base station from the multiple candidate target base stations as the handover target based on energy, capacity, speed and the like of the candidate target base stations B.

In the embodiment, after receiving a response message, the source base station A may predict a measurement result of the base station B obtained at any moment after transmission of the response message, based on the measurement result and the change rate for the measurement result contained in the message. In a case that the change rate (slope) for the measurement result of the base station B changes greatly (for example greater than the threshold D), the measurement result cannot be accurately predicted based on the previous change rate. Therefore, the base station B is required to transmit a new response message, to notify the source base station A of a new measurement result and a change rate for the measurement result. In a case that the change rate (slope) for the measurement result of the base station B does not change greatly, the base station B is unnecessary to transmit a new response message. In this way, messages or signaling to be transmitted by the base station B can be further reduced.

Figure 8 schematically shows a curve indicating change of measurement results of the base station A and the base station B and corresponding signaling interaction according to a third embodiment of the present disclosure. As shown in Figure 8, line $X_A$ and line $X_B$ respectively indicate change of uplink reference signal reception quality measured by the base station A and the base station B over time. Particularly, to clarify the embodiment, the measurement result $X_B$ of the base station B is indicated as a curve. It should be understood by those skilled in the art that the measurement result $X_A$ of the base station A may also be a curve, but is indicated as a straight line in Figure 8 for the purpose of clarity.

At time $t_1$, the measurement result $X_A$ of the base station A is less than the initial threshold S, and the base station A transmits the message Msg1 to the base station B. At time $t_2$, an amount of change $\Delta d_B(t_2)$ in the change rate $d_B(t_2)$ for the measurement result of the base station B is greater than the preset threshold D, and the base station B transmits the response message Msg2 to the base station A. At time t3, the base station B detects again that an amount of change $\Delta d_B(t_3)$ in the change rate $d_B(t_3)$ for the measurement result is greater than preset threshold D, and the base station B transmits a new response message Msg2 to the base station A. At time t4 (a certain moment after the base station A receives the new response message Msg2), the base station A predicts a measurement result at time t4 of the base station B, based on the response message Msg2 recently transmitted (transmitted at the second time) by the base station B, and determines whether the predicted measurement result is higher than the measurement result at time t4 of the base station A by the threshold O. If the predicted measurement result is higher than the measurement result at time t4 of the base station A by the threshold O, the base station A may perform handover decision to handover the user equipment to the base station B. In order to illustrate the principle of the present disclosure, Figure 8 shows that the base station B transmits the response message Msg2 twice. However, it should be understood by those skilled in the art that the response message Msg2 may be transmitted multiple times or only once during an actual process.

According to the embodiments of the present disclosure described with reference to the drawings, the technical solutions of effectively performing the handover decision by the source base station without the background control center are put forward in the present disclosure. According to the solutions of the present disclosure, the source base station can quickly obtain information on the candidate target base stations required for handover decision, thereby reducing signaling overhead and improving the overall performance of the handover process based on the uplink measurement.

The present disclosure may be applied to various products. For example, the base station in the above embodiments may include any type involved node B (eNB), such as macro eNB and a small eNB. The small eNB may be an eNB covering a cell smaller than the macro cell, such as a pico eNB, a micro eNB and a home (femto) eNB. Alternatively, the network side device or the base station may include any type of base station, such as NodeB and a base station transceiver station (BTS). The base station may include: a body configured to control wireless communication (also referred to as a base station device); and one or more remote radio head (RRH) arranged at a position different from that of the body. In addition, various types of terminal device may function as the base station to operate by performing the functions of the base station temporarily or in a semi-persistent manner.

In another aspect, the user equipment in the above embodiments may be implemented as a communication terminal device (such as a smartphone, a tablet personal computer (PC), a notebook PC, a portable game terminal, a portable/dongle mobile router and a digital camera) or a vehicle-mounted terminal device (such as a vehicle navigation device), and may also be implemented as a terminal device performing machine to machine (M2M) communication, which is also referred to as a machine type communication (MTC) terminal device. In addition, the terminal device or the user equipment may be a wireless communication module (such as an integrated circuit module including a single wafer) installed on each of the above terminals.

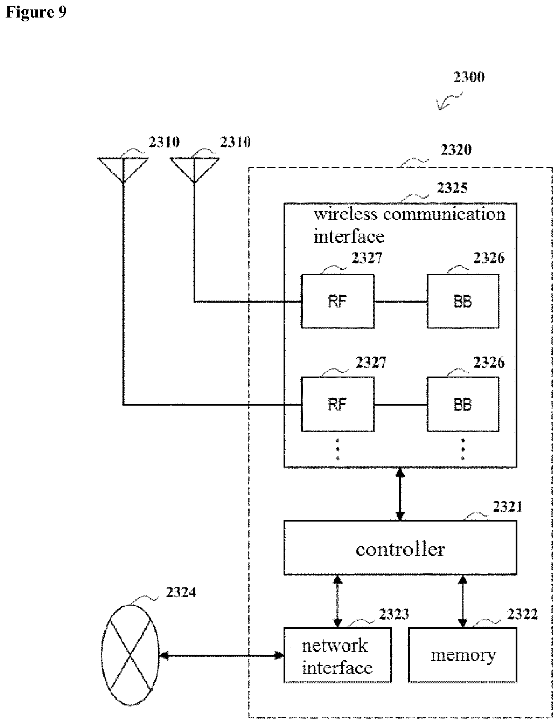

An implementation of the base station is described in conjunction with Figure 9 by taking eNB as an example.

Figure 9 shows a block diagram of a schematic configuration of the eNB. As shown in Figure 9, an eNB 2300 includes one or more antennas 2310, and a base station device 2320. The base station device 2320 is connected to each antenna 2310 via a radio frequency (RF) cable.

Each of the antennas 2310 includes a single or multiple antenna elements (such as multiple antenna elements included in a multiple-input multiple-output (MIMO) antenna) and is used for the base station device 2320 to transmit and receive a wireless signal. As shown in Figure 9, the eNB 2300 may include multiple antennas 2310. For example, the multiple antennas 2310 may be compatible with multiple frequency bands used by the eNB 2300. Although Figure 9 shows an example in which the eNB 2300 includes multiple antennas 2310, the eNB 2300 may include a single antenna 2310.

The base station device 2320 includes a controller 2321, a memory 2322, a network interface 2323 and a wireless communication interface 2325.

The controller 2321 may be a CPU or DSP for example and controls various types of functions of higher layers of the base station device 2320. For example, the controller 2321 generates a data packet according to data in a signal processed by the wireless communication interface 2325, and transfers the generated packet via the network interface 2323. The controller 2321 may bundle data from multiple baseband processors to generate a bundle packet and transfers the generated bundle packet. The controller 2321 may have logic functions to perform the following control: such as wireless resource control, wireless bearer control, mobility management, admission control and schedule. The control may be implemented in conjunction with an eNB or a core network node nearby. The memory 2322 includes an RAM and an ROM and stores programs performed by the controller 2321 and various types of control data (such as a terminal list, transmission power data and schedule data).

The network interface 2323 is a communication interface connecting a base station device 2320 to a core network 2324. The controller 2321 may communicate with a core network node or another eNB via the network interface 2323. In this case, the eNB 2300 may be connected to the core network node or other eNB via a logic interface (such as an S1 interface and an X2 interface). The network interface 2323 may also be a wired communication interface or a wireless communication interface for a wireless backhaul line. If the network interface 2323 is a wireless communication interface, the network interface 2323 may use a higher frequency band for wireless communication as compared with a frequency band used by the wireless communication interface 2325.

The wireless communication interface 2325 supports any cellular communication scheme (such as Long Term Evolution and LTE-advanced), and provide wireless connection to a terminal in a cell of the eNB 2300 via an antenna 2310. The wireless communication interface 2325 may generally include a baseband (BB) processor 2326 and an RF circuit 2327. The BB processor 2326 may perform for example encoding/decoding, modulating/demodulating and multiplexing and de-multiplexing and perform various types of signal processing of layers (such as L1, medium access control (MAC), radio link control (RLC) and packet data convergence protocol (PDCP). Instead of a controller 2321, the BB processor 2326 may have a part or all of the logic functions described above. The BB processor 2326 may be a memory storing communication control programs, or a module including a processor and related circuits configured to perform programs. Updating programs may change functions of the BB processor 2326. The module may be a card or a blade inserted to a slot of the base station device 2320. Alternatively, the module may also be a chip installed on the card or the blade. Meanwhile, an RF circuit 2327 may include for example a mixer, a filter and an amplifier, and transmits and receives a wireless signal via the antenna 2310.

As shown in Figure 9, the wireless communication interface 2325 may include multiple BB processors 2326. For example, the multiple BB processors 2326 may be compatible with multiple frequency bands used by the eNB 2300. As shown in Figure 9, the wireless communication interface 2325 may include multiple RF circuits 2327. For example, the multiple RF circuits 2327 may be compatible with multiple antenna elements. Although Figure 9 shows an example in which the wireless communication interface 2325 includes multiple BB processors 2326 and multiple RF circuits 2327, the wireless communication interface 2325 may include a single BB processor 2326 or a single RF circuit 2327.

In the eNB 2300 shown in Figure 9, the transceiving apparatus of the base station side device may be implemented by the wireless communication interface 2325. At least a part of functions of various units may be achieved by the controller 2321. For example, the controller 2321 may perform at least a part of functions of various units by executing program stored in the memory 2322.

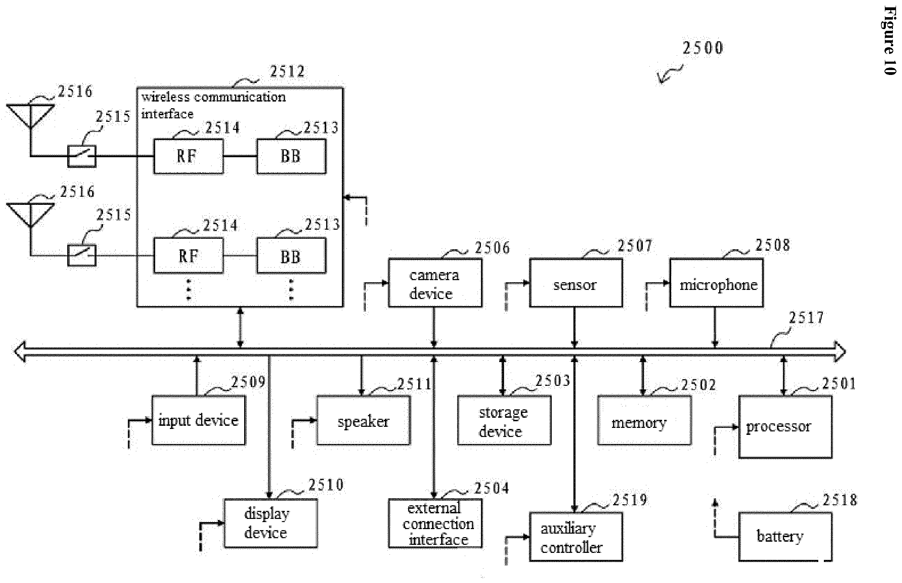

An implementation of user equipment is described with reference to Figure 10 by taking a smartphone as an example.

Figure 10 is a block diagram showing a schematic configuration of a smart phone. As shown in Figure 10, the smart phone 2500 includes: a processor 2501, a memory 2502, a storage apparatus 2503, an external connection interface 2504, a camera device 2506, a sensor 2507, a microphone 2508, an input apparatus 2509, a display apparatus 2510, a speaker 2511, a wireless communication interface 2512, one or more antenna switches 2515, one or more antennas 2516, a bus 2517, a battery 2518 and an auxiliary controller 2519.

The processor 2501 may be for example a CPU or a system on chip (SoC), and control functions of an application layer and other layers of the smart phone 2500. The memory 2502 includes an RAM and an ROM, and stores programs executed by the processor 2501 and data. The storage apparatus 2503 may include a storage medium, such as a semiconductor memory and a hard disk. The external connection interface 2504 is an interface configured to connect an external apparatus (such as a memory card and a universal serial bus (USB) device) to the smart phone 2500.

The camera device 2506 includes an image sensor (such as a charge coupled device (CCD) and a complementary metal oxide semiconductor (CMOS)) and generates a captured image. The sensor 2507 may include a set of sensors, such as a measurement sensor, a gyroscope sensor, a geomagnetic sensor and an acceleration sensor. The microphone 2508 converts sound inputted into the smart phone 2500 into an audio signal. The input apparatus 2509 includes for example a touch sensor configured to detect touch on a screen of the display apparatus 2510, a keypad, a keyboard, a button or a switch, and receives an operation or information inputted from a user. The display apparatus 2510 includes a screen (such as a liquid crystal display (LCD) and an organic light emitting diode (OLED) display), and displays an output image of the smart phone 2500. The speaker 2511 converts the audio signal outputted from the smart phone 2500 into sound.

The wireless communication interface 2512 supports any cellular communication scheme (such as LTE and LTE-advanced), and performs wireless communication. The wireless communication interface 2512 may generally include for example a BB processor 2513 and an RF circuit 2514. The BB processor 2513 may perform encoding/decoding, modulating/demodulating and multiplexing/de-multiplexing for example, and perform various types of signal processing for wireless communication. Meanwhile, the RF circuit 2514 may include for example a mixer, a filter and an amplifier, and transmits and receives a wireless signal via an antenna 2516. The wireless communication interface 2512 may be a chip module on which a BB processor 2513 and the RF circuit 2514 are integrated. As shown in Figure 10, the wireless communication interface 2512 may include multiple BB processors 2513 and multiple RF circuits 2514. However, the wireless communication interface 2512 may include a single BB processor 2513 or a single RF circuit 2514.

In addition to the cellular communication scheme, the wireless communication interface 2512 may support other types of wireless communication schemes, such as a short distance wireless communication scheme, a near field communication scheme and a wireless local area network (LAN) scheme. In this case, the wireless communication interface 2512 may include a BB processor 2513 and an RF circuit 2514 for each type of wireless communication scheme.

Each of the wireless switches 2515 switches a connection destination of the antenna 2516 between multiple circuits (for example circuits for different wireless communication schemes) included in the wireless communication interface 2512.

Each of the antennas 2516 includes a single or multiple antenna elements (such as multiple antenna elements included in the MIMO antenna), and is used for the wireless communication interface 2512 to transmit and receive a wireless signal. As shown in Figure 10, the smart phone 2500 may include multiple antennas 2516. However, the smart phone 2500 may include a single antenna 2516.

In addition, the smart phone 2500 may include an antenna 2516 for each type of wireless communication scheme. In this case, the antenna switch 2515 may be omitted from the configuration of the smart phone 2500.

The bus 2517 connects the processor 2501, the memory 2502, the storage apparatus 2503, the external connection interface 2504, the camera device 2506, the sensor 2507, the microphone 2508, the input apparatus 2509, the display apparatus 2510, the speaker 2511, the wireless communication interface 2512 and the auxiliary controller 2519 with each other. The battery 2518 supplies power for components in the smart phone 2500 via a feeder which is indicated partially as a dashed line in the figure. The auxiliary controller 2519 controls a minimum necessary function of the smart phone 2500 in a sleeping mode, for example.

In the smart phone 2500 shown in Figure 10, the transceiving apparatus of the terminal device may be implemented by the wireless communication interface 2512. At least a part of functions of various functional units of the terminal device may be implemented by the processor 2501 or the auxiliary controller 2519. For example, power consumption of the battery 2518 may be reduced by achieving a part of functions of the processor 2501 by the auxiliary controller 2519. In addition, the processor 2501 or the auxiliary controller 2519 may achieve at least a part of functions of various functional units of the terminal device by executing programs stored in the memory 2502 or the storage apparatus 2503.

In addition, a series of processing performed by each device or unit in the above embodiments may be implemented by software, hardware, or a combination of software and hardware. Programs included in the software may be stored in each device or unit or an external storage medium in advance, for example. As an example, during performing, the programs are written into a random access memory (RAM) and are executed by a processor (such as a CPU), thereby performing the method and processing described in the above embodiments. The present disclosure includes the program codes and program products, and the computer readable recording medium on which the program codes are recorded.

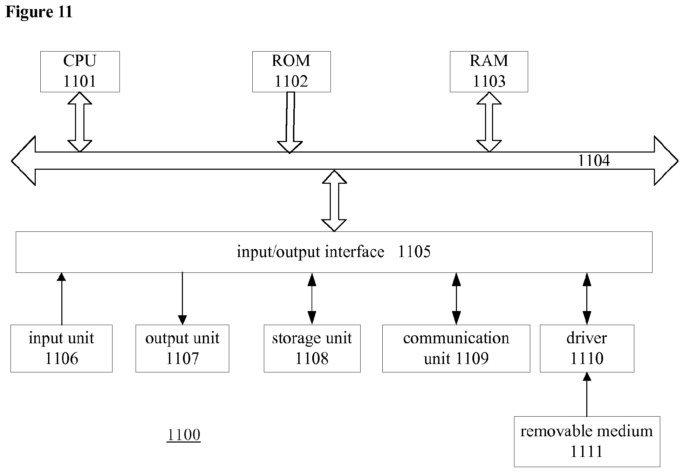

Figure 11 is a block diagram showing a schematic configuration of hardware of a computer which performs solutions of the present disclosure according to programs.

In a computer 1100, a central processing unit (CPU) 1101, a read only memory (ROM) 1102 and a random access memory (RAM) 1103 are connected to each other via a bus 1104.

An input/output interface 1105 is further connected to a bus 1104. The following components are connected to the input/output unit 1105: an input unit 1106 such as a keyboard, a mouse or a microphone; an output unit 1107 such as a display or a loudspeaker; a storage unit 1108 such as a hard disk, a non-volatile memory; a communication unit 1109 such as a network interface card (for example a local area network (LAN) card, and a modem); and a driver 1110 for driving a removable medium 1111. The removable medium 1111 may be for example a magnetic disk, an optical disk, a magnetic-optical disk, and a semiconductor memory.

In the computer having the above structure, the CPU 1101 loads programs stored in the storage unit 1108 into the RAM 1103 via the input/output interface 1105 and the bus 1104, and executes the programs, thereby performing the above processing.

Programs to be executed by the computer (the CPU 1101) may be recorded on the removable medium 1111 as a package medium. The package medium may be formed by for example a magnetic disk (including a floppy disk), an optical disk (including compact disk read only memory (CD-ROM)), digital versatile disk (DVD), a magnetic-optical disk or a semiconductor memory. In addition, programs to be executed by the computer (the CPU 1101) may be provided by wired or wireless transmission media such as a local area network, the Internet or a digital satellite broadcast.

In a case that the removable medium 1111 is installed in the driver 1110, the programs may be installed in the storage unit 1108 via the input/output interface 1105. In addition, the programs may be received by the communication unit 1109 via wired or wireless transmission medium, and the programs are installed in the storage unit 1108. Alternatively, the programs may be installed in the ROM 1102 or the storage unit 1108 in advance.

The programs to be executed by the computer may be programs for performing processing in an order described in the specification, or the programs for performing the processing in parallel or as needed (for example, when being called).

The devices or units are described herein only in a logical meaning, and do not strictly correspond to the physical device or entities. For example, functions of each unit described herein may be implemented by multiple physical entities. Alternatively, the function of multiple units described herein may be implemented by a single physical entity. In addition, it should be noted that, features, components, elements, steps and the like described in one embodiment are not limited to be applied in the embodiment, but may be applied to other embodiments, for example, replacing specific features, components, elements, steps and the like in other embodiments, or combined with the specific features, components, elements, steps in other embodiments.

The embodiments of the present disclosure and the technical effects are described in detail above in conjunction with the drawings, but the scope of the present disclosure is not limited thereto. It should be understood by those skilled in the art that, depending on design requirements and other factors, various changes or modifications may be made to the embodiments discussed herein without departing from the scope of the claims.

In addition, the following configurations are provided according to the present disclosure.

A communication method performed by a base station, including: measuring a first reception quality of an uplink reference signal broadcasted by a terminal device; generating an initial message for instructing a neighbor base station to measure a second reception quality of the uplink reference signal, when the first measured reception quality is lower than a preset first threshold; and determining whether to instruct the terminal device to handover to the neighbor base station based on a response message from the neighbor base station, where the response message indicates the second reception quality measured by the neighbor base station.

The communication method further includes: decreasing the first threshold; measuring the first reception quality of the uplink reference signal after decreasing the first threshold; and generating a notification message indicating the measured first reception quality to transmit the notification message to the neighbor base station, when the measured first reception quality is lower than the decreased first threshold.

The communication method further includes: decreasing the first threshold a number of times, and measuring the first reception quality of the uplink reference signal every time the first threshold is decreased; and generating and transmitting the notification message a number of times.

The communication method further includes: decreasing the first threshold a number of times by decreasing the first threshold by a first predetermined value each time, where the first predetermined value is set based on a speed of the terminal device.

The communication method further includes: instructing the terminal device to handover to the neighbor base station when the second reception quality measured by the neighbor base station is higher than the first reception quality measured by the base station by a certain threshold.

The communication method further includes: instructing the terminal device to handover to the neighbor base station upon receipt of the response message from the neighbor base station.

The communication method further includes: predicting, based on the response message from the neighbor base station, the second reception quality measured by the neighbor base station after the response message is transmitted; and instructing the terminal device to handover to the neighbor base station when the predicted second reception quality of the neighbor base station is higher than the first reception quality measured by the base station by a certain threshold.

When multiple neighbor base stations meet one of conditions including: the second reception quality measured by the neighbor base station is higher than the first reception quality measured by the base station by a certain threshold; the response message from the neighbor base station is received; and the predicted second reception quality of the neighbor base station is higher than the first reception quality measured by the base station by a certain threshold, one of the multiple neighbor base stations is selected as a base station to which the terminal device is to handover, based on energy, capacity or speed of the multiple neighbor base stations.

The first threshold is preset based on at least one of radius of a cell, transmission power, electromagnetic wave propagation environment, and requirement on signal to interference ratio.

The certain threshold is preset based on at least one of radius of a cell, transmission power, electromagnetic wave propagation environment, requirement on signal to interference ratio, and experience and preference of an operator.

A communication method performed by a base station, including:

measuring a first reception quality of an uplink reference signal broadcasted by a terminal device upon receipt of an initial message from a neighbor base station; and generating a response message indicating the measured first reception quality to transmit the response message to the neighbor base station, where the neighbor base station generates the initial message based on a second reception quality of the uplink reference signal measured by the neighbor base station.

The communication method further includes: increasing a preset second threshold; measuring the first reception quality of the uplink reference signal after increasing the second threshold; and transmitting the response message when the measured first reception quality is higher than the increased second threshold.

The communication method further includes: increasing the second threshold a number of times, and measuring the first reception quality of the uplink reference signal every time the second threshold is increased; and generating and transmitting the response message a number of times.

The communication method further includes: increasing the second threshold a number of times by increasing the second threshold by a second predetermined value each time, where the second predetermined value is set based on a speed of the terminal device.

The neighbor base station generates the initial message when the second reception quality measured by the neighbor base station is lower than a first threshold, the communication method further including: transmitting the response message when the first reception quality measured by the base station is higher than the first threshold by a certain threshold.

The communication method further includes: transmitting the response message when an amount of change in changing rate of the first reception quality measured by the base station is larger than a third threshold, where the response message indicates the first reception quality measured by the base station and the changing rate of the measured first reception quality.

The first and second thresholds are preset based on at least one of radius of a cell, transmission power, electromagnetic wave propagation environment, and requirement on signal to interference ratio.

The third threshold is preset based on a speed of the terminal device.

The certain threshold is preset based on at least one of radius of a cell, transmission power, electromagnetic wave propagation environment, requirement on signal to interference ratio, and experience and preference of an operator.

A base station device including a processing circuitry configured to perform the communication method described above.

A computer-readable recording medium storing a program which, when being executed, causes a computer to execute the communication method described above.

## Claims

1. A communication method performed by a base station (2300), comprising:

   measuring a first reception quality of an uplink reference signal broadcasted by a terminal device (2500);
   generating and transmitting (S301) an initial message for instructing a neighbor base station to measure a second reception quality of the uplink reference signal, when the first measured reception quality is lower than a preset first threshold;
   receiving (S303) a response message from the neighbor base station in response to the initial message, wherein said response message includes a measured second reception quality which is higher than a preset second threshold;
   said method being **characterized by**:

   decreasing (S304) the first threshold;
   measuring (S305) the first reception quality of the uplink reference signal after decreasing the first threshold;
   generating (S306) a notification message indicating the measured first reception quality and transmitting the notification message to the neighbor base station, when the measured first reception quality is lower than the decreased first threshold; and
   determining (S311) whether to instruct the terminal device to handover to the neighbor base station based on a response message (S309) from the neighbor base station in response to the notification message, wherein the response message indicates the second reception quality measured by the neighbor base station, wherein said second reception quality is higher than an increased second threshold.

2. The communication method according to claim 1, further comprising:

decreasing the first threshold a number of times, and measuring the first reception quality of the uplink reference signal every time the first threshold is decreased; and

generating and transmitting the notification message said number of times.

3. The communication method according to claim 2, wherein decreasing the first threshold comprises decreasing the first threshold by a first predetermined value each time,

wherein the first predetermined value is set based on a speed of the terminal device.

4. The communication method according to claim 1, further comprising:

instructing the terminal device to handover to the neighbor base station when the second reception quality measured by the neighbor base station is higher than the first reception quality measured by the base station by a certain threshold.

5. The communication method according to claim 1, wherein the steps of transmitting an initial message, receiving a response message to the initial message, transmitting a notification message and receiving a response message to the notification message are additionally performed for each of one or more additional neighbor base stations, wherein when a plurality of neighbor base stations meet a condition that the second reception quality measured by the neighbor base station is higher than the first reception quality measured by the base station by a certain threshold, one of the plurality of neighbor base stations is selected as a base station to which the terminal device is to handover, based on energy, capacity or speed of the plurality of neighbor base stations.

6. A communication method performed by a base station, comprising:

measuring a first reception quality of an uplink reference signal broadcasted by a terminal device;
generating (S701) and transmitting an initial message for instructing a neighbor base station to measure a second reception quality of the uplink reference signal, when the first measured reception quality is lower than a preset first threshold; and
receiving (S703) a response message from said neighbor base station in response to the initial message, wherein the response message includes the second reception quality measured by the neighbor base station; said method being **characterized by**:

predicting, (S704) based on the response message from the neighbor base station, the second reception quality measured by the neighbor base station at a time after the response message is transmitted, wherein the response message further includes the rate according to which the second reception quality changes; and
instructing (S706) the terminal device to handover to the neighbor base station when the predicted second reception quality of the neighbor base station is higher than the first reception quality measured by the base station by a certain threshold.

7. The communication method according to claim 6, wherein the steps of generating, receiving and predicting are additionally performed for each of one or more additional neighbor base stations, wherein when a plurality of neighbor base stations meet a condition that
the predicted second reception quality of the neighbor base station is higher than the first reception quality measured by the base station by a certain threshold,
one of the plurality of neighbor base stations is selected as a base station to which the terminal device is to handover, based on energy, capacity or speed of the plurality of neighbor base stations.

8. The communication method according to any of claims 1 to 6, wherein the first threshold is preset based on at least one of radius of a cell, transmission power, electromagnetic wave propagation environment, and requirement on signal to interference ratio.

9. The communication method according to claim 4 or 6, wherein the certain threshold is preset based on at least one of radius of a cell, transmission power, electromagnetic wave propagation environment, requirement on signal to interference ratio, and experience and preference of an operator.

10. A base station device (2300) comprising a processing circuitry (2320) configured to perform the communication method according to any of claims 1 to 9.

**11.** A communication method performed by a base station (2300), comprising:

measuring (S302) a first reception quality of an uplink reference signal broadcasted by a terminal device (2500) upon receipt of an initial message from a neighbor base station;

generating (S303) a response message indicating the measured first reception quality and transmitting the response message to the neighbor base station when said measured first reception quality is higher than a preset second threshold,

said method being **characterized by**

increasing (S307) said preset second threshold;

measuring (S308) the first reception quality of the uplink reference signal after increasing the second threshold; and

transmitting (S309) a response message when the measured first reception quality is higher, than the increased second threshold, wherein the response message is in response to a notification message from the neighbor base station,

wherein the initial message indicates that a second reception quality of the uplink reference signal measured by the neighbor base station is lower than a first threshold, wherein the notification message indicates that a second reception quality of the uplink reference signal measured by the neighbor base station is lower than a decreased first threshold.

**12.** The communication method according to claim 11, further comprising:

increasing the second threshold a number of times, and measuring the first reception quality of the uplink reference signal every time the second threshold is increased; and

generating and transmitting the response message said number of times.

**13.** The communication method according to claim 12, wherein increasing the second threshold comprises increasing the second threshold by a second predetermined value each time,

wherein the second predetermined value is set based on a speed of the terminal device.

**Patentansprüche**

**1.** Kommunikationsverfahren, das durch eine Basisstation (2300) durchgeführt wird, umfassend:

Messen einer ersten Empfangsqualität eines durch eine Endgerätevorrichtung (2500) per Broadcast gesendeten Uplink-Referenzsignals;

Erzeugen und Übertragen (S301) einer Anfangsnachricht zum Anweisen einer Nachbarbasisstation, eine zweite Empfangsqualität des Uplink-Referenzsignals zu messen, wenn die erste gemessene Empfangsqualität niedriger als eine voreingestellte erste Schwelle ist;

Empfangen (S303) einer Antwortnachricht von der Nachbarbasisstation als Antwort auf die Anfangsnachricht, wobei die Antwortnachricht eine gemessene zweite Empfangsqualität beinhaltet, die höher als eine voreingestellte zweite Schwelle ist;

wobei das Verfahren **gekennzeichnet ist durch**:

Verringern (S304) der ersten Schwelle;

Messen (S305) der ersten Empfangsqualität des Uplink-Referenzsignals nach Verringern der ersten Schwelle;

Erzeugen (S306), einer Benachrichtigungsnachricht, die die gemessene erste Empfangsqualität angibt, und Übertragen der Benachrichtigungsnachricht an die Nachbarbasisstation, wenn die gemessene erste Empfangsqualität niedriger als die verringerte erste Schwelle ist; und

Bestimmen (S311), ob die Endgerätevorrichtung angewiesen werden soll, ein Handover zu der Nachbarbasisstation durchzuführen, basierend auf einer Antwortnachricht (S309) von der Nachbarbasisstation als Antwort auf die Benachrichtigungsnachricht, wobei die Antwortnachricht die **durch** die Nachbarbasisstation gemessene zweite Empfangsqualität angibt, wobei die zweite Empfangsqualität höher als eine erhöhte zweite Schwelle ist.

**2.** Kommunikationsverfahren nach Anspruch 1, bei dem ferner:

die erste Schwelle mehrere Male verringert wird und die erste Empfangsqualität des Uplink-Referenzsignals jedes Mal, wenn die erste Schwelle verringert wird, gemessen wird; und
die Benachrichtigungsnachricht die mehreren Male erzeugt und übertragen wird.

3. Kommunikationsverfahren nach Anspruch 2, wobei das Verringern der ersten Schwelle umfasst, dass die erste Schwelle jedes Mal um einen ersten vorbestimmten Wert verringert wird,
wobei der erste vorbestimmte Wert basierend auf einer Geschwindigkeit der Endgerätevorrichtung eingestellt wird.

4. Kommunikationsverfahren nach Anspruch 1, ferner umfassend:
Anweisen der Endgerätevorrichtung, ein Handover zu der Nachbarbasisstation durchzuführen, wenn die durch die Nachbarbasisstation gemessene zweite Empfangsqualität um eine gewisse Schwelle höher als die durch die Basisstation gemessene erste Empfangsqualität ist.

5. Kommunikationsverfahren nach Anspruch 1, wobei die Schritte Übertragen einer Anfangsnachricht, Empfangen einer Antwortnachricht auf die Anfangsnachricht, Übertragen einer Benachrichtigungsnachricht und Empfangen einer Antwortnachricht auf die Benachrichtigungsnachricht zusätzlich für jede einer oder mehrerer zusätzlicher Nachbarbasisstationen durchgeführt werden, wobei, wenn mehrere Nachbarbasisstationen eine Bedingung erfüllen, dass die durch die Nachbarbasisstation gemessene zweite Empfangsqualität um eine gewisse Schwelle höher als die durch die Basisstation gemessene erste Empfangsqualität ist, eine der mehreren Nachbarbasisstationen als eine Basisstation ausgewählt wird, zu der die Endgerätevorrichtung ein Handover durchführen soll, basierend auf Energie, Kapazität oder Geschwindigkeit der mehreren Nachbarbasisstationen.

6. Kommunikationsverfahren, das durch eine Basisstation durchgeführt wird, umfassend:

Messen einer ersten Empfangsqualität eines durch eine Endgerätevorrichtung per Broadcast gesendeten Uplink-Referenzsignals;
Erzeugen (S701) und Übertragen einer Anfangsnachricht zum Anweisen einer Nachbarbasisstation, eine zweite Empfangsqualität des Uplink-Referenzsignals zu messen, wenn die erste gemessene Empfangsqualität niedriger als eine voreingestellte erste Schwelle ist;
Empfangen (S703) einer Antwortnachricht von der Nachbarbasisstation als Antwort auf die Anfangsnachricht, wobei die Antwortnachricht die durch die Nachbarbasisstation gemessene zweite Empfangsqualität beinhaltet;
wobei das Verfahren **gekennzeichnet ist durch**:

Vorhersagen (S704), basierend auf der Antwortnachricht von der Nachbarbasisstation, der **durch** die Nachbarbasisstation gemessenen zweiten Empfangsqualität zu einer Zeit, nachdem die Antwortnachricht übertragen wurde, wobei die Antwortnachricht ferner die Rate beinhaltet, gemäß der sich die zweite Empfangsqualität ändert; und
Anweisen (S706) der Endgerätevorrichtung, ein Handover zu der Nachbarbasisstation durchzuführen, wenn die vorhergesagte zweite Empfangsqualität der Nachbarbasisstation um eine gewisse Schwelle höher als die **durch** die Basisstation gemessene erste Empfangsqualität ist.

7. Kommunikationsverfahren nach Anspruch 6, wobei die Schritte Erzeugen, Empfangen und Vorhersagen zusätzlich für jede einer oder mehrerer zusätzlicher Nachbarbasisstationen durchgeführt werden, wobei, wenn mehrere Nachbarbasisstationen eine Bedingung erfüllen, dass die vorhergesagte zweite Empfangsqualität der Nachbarbasisstation um eine gewisse Schwelle höher als die durch die Basisstation gemessene erste Empfangsqualität ist,
eine der mehreren Nachbarbasisstationen als eine Basisstation ausgewählt wird, zu der die Endgerätevorrichtung ein Handover durchführen soll, basierend auf Energie, Kapazität oder Geschwindigkeit der mehreren Nachbarbasisstationen.

8. Kommunikationsverfahren nach einem der Ansprüche 1 bis 6, wobei die erste Schwelle basierend auf einem Radius einer Zelle und/oder einer Übertragungsleistung und/oder einer Ausbreitungsumgebung für elektromagnetische Wellen und/oder einer Anforderung hinsichtlich des Signal-zu-Störung-Verhältnisses voreingestellt wird.

9. Kommunikationsverfahren nach Anspruch 4 oder 6, wobei die gewisse Schwelle basierend auf einem Radius einer Zelle und/oder einer Übertragungsleistung und/oder einer Ausbreitungsumgebung für elektromagnetische Wellen und/oder einer Anforderung hinsichtlich des Signal-zu-Störung-Verhältnisses und der Erfahrung und Präferenz eines Bedieners voreingestellt wird.

10. Basisstationsvorrichtung (2300), umfassend eine Verarbeitungsschaltungsanordnung (2320), ausgelegt zum Durchführen des Kommunikationsverfahrens nach einem der Ansprüche 1 bis 9.

11. Kommunikationsverfahren, das durch eine Basisstation (2300) durchgeführt wird, umfassend:

Messen (S302) einer ersten Empfangsqualität eines durch eine Endgerätevorrichtung (2500) per Broadcast gesendeten Uplink-Referenzsignals bei Empfang einer Anfangsnachricht von einer Nachbarbasisstation; Erzeugen (S303) einer Antwortnachricht, die die gemessene erste Empfangsqualität angibt, und Übertragen der Antwortnachricht an die Nachbarbasisstation, wenn die gemessene erste Empfangsqualität höher als eine voreingestellte zweite Schwelle ist,
wobei das Verfahren **gekennzeichnet ist durch**:

Erhöhen (S307) der voreingestellten zweiten Schwelle;
Messen (S308) der ersten Empfangsqualität des Uplink-Referenzsignals nach Erhöhen der zweiten Schwelle; und
Übertragen (S309), einer Antwortnachricht, wenn die gemessene erste Empfangsqualität höher als die erhöhte zweite Schwelle ist, wobei die Antwortnachricht als Antwort auf eine Benachrichtigungsnachricht von der Nachbarbasisstation erfolgt, wobei die Anfangsnachricht angibt, dass eine **durch** die Nachbarbasisstation gemessene zweite Empfangsqualität des Uplink-Referenzsignals niedriger als eine erste Schwelle ist,
wobei die Benachrichtigungsnachricht angibt, dass eine durch die Nachbarbasisstation gemessene zweite Empfangsqualität des Uplink-Referenzsignals niedriger als eine verringerte erste Schwelle ist.

12. Kommunikationsverfahren nach Anspruch 11, bei dem ferner:

die zweite Schwelle mehrere Male erhöht wird und die erste Empfangsqualität des Uplink-Referenzsignals jedes Mal, wenn die zweite Schwelle erhöht wird, gemessen wird; und
die Antwortnachricht die mehreren Male erzeugt und übertragen wird.

13. Kommunikationsverfahren nach Anspruch 12, wobei das Erhöhen der zweiten Schwelle umfasst, dass die zweite Schwelle jedes Mal um einen zweiten vorbestimmten Wert erhöht wird,
wobei der zweite vorbestimmte Wert basierend auf einer Geschwindigkeit der Endgerätevorrichtung eingestellt wird.

**Revendications**

1. Procédé de communication exécuté par une station de base (2300), comprenant :

la mesure d'une première qualité de réception d'un signal de référence en liaison montante diffusé par un dispositif terminal (2500) ;
la génération et la transmission (S301) d'un message initial pour donner instruction à une station de base voisine de mesurer une seconde qualité de réception du signal de référence en liaison montante, lorsque la première qualité de réception mesurée est inférieure à un premier seuil prédéfini ;
la réception (S303) d'un message de réponse provenant de la station de base voisine en réponse au message initial, dans lequel ledit message de réponse comprend une seconde qualité de réception mesurée qui est supérieure à un second seuil prédéfini ;
ledit procédé étant **caractérisé par** :

la diminution (S304) du premier seuil ;
la mesure (S305) de la première qualité de réception du signal de référence en liaison montante après la diminution du premier seuil ;
la génération (S306) d'un message de notification indiquant la première qualité de réception mesurée et la transmission du message de notification à la station de base voisine, lorsque la première qualité de réception mesurée est inférieure au premier seuil diminué ; et
la détermination (S311) pour savoir s'il faut donner instruction au dispositif terminal d'effectuer un transfert intercellulaire vers la station de base voisine sur la base d'un message de réponse (S309) provenant de la station de base voisine en réponse au message de notification, dans lequel le message de réponse indique la seconde qualité de réception mesurée par la station de base voisine, dans lequel ladite seconde qualité de réception est supérieure à un second seuil augmenté.

2. Procédé de communication selon la revendication 1, comprenant en outre :

la diminution du premier seuil un certain nombre de fois, et la mesure de la première qualité de réception du signal de référence en liaison montante à chaque fois que le premier seuil est diminué ; et la génération et la transmission du message de notification ledit certain nombre de fois.

3. Procédé de communication selon la revendication 2, dans lequel la diminution du premier seuil comprend la diminution du premier seuil d'une première valeur prédéterminée à chaque fois, dans lequel la première valeur prédéterminée est basée sur une vitesse du dispositif terminal.

4. Procédé de communication selon la revendication 1, comprenant en outre : le fait de donner instruction au dispositif terminal d'effectuer un transfert intercellulaire vers la station de base voisine lorsque la seconde qualité de réception mesurée par la station de base voisine est supérieure à la première qualité de réception mesurée par la station de base d'un certain seuil.

5. Procédé de communication selon la revendication 1, dans lequel les étapes de transmission d'un message initial, de réception d'un message de réponse au message initial, de transmission d'un message de notification et de réception d'un message de réponse au message de notification sont exécutées en plus pour chaque station parmi une ou plusieurs stations de base voisines supplémentaires, dans lequel lorsqu'une pluralité de stations de base voisines satisfont une condition étant que la seconde qualité de réception mesurée par la station de base voisine est supérieure à la première qualité de réception mesurée par la station de base d'un certain seuil, une station parmi la pluralité de stations de base voisines est sélectionnée en tant que station de base vers laquelle le dispositif terminal doit effectuer un transfert intercellulaire, sur la base de l'énergie, de la capacité ou de la vitesse de la pluralité des stations de base voisines.

6. Procédé de communication exécuté par une station de base, comprenant :

la mesure d'une première qualité de réception d'un signal de référence en liaison montante diffusé par un dispositif terminal ; la génération (S701) et la transmission d'un message initial pour donner instruction à une station de base voisine de mesurer une seconde qualité de réception du signal de référence en liaison montante, lorsque la première qualité de réception mesurée est inférieure à un premier seuil prédéfini ; et la réception (S703) d'un message de réponse provenant de ladite station de base voisine en réponse au message initial, dans lequel le message de réponse comprend la seconde qualité de réception mesurée par la station de base voisine ; ledit procédé étant **caractérisé par** :

la prédiction (S704), sur la base du message de réponse provenant de la station de base voisine, de la seconde qualité de réception mesurée par la station de base voisine à un moment après la transmission du message de réponse, dans lequel le message de réponse comprend en outre le débit en fonction duquel la seconde qualité de réception change ; et l'instruction (S706) au dispositif terminal d'effectuer un transfert intercellulaire vers la station de base voisine lorsque la seconde qualité de réception prédite de la station de base voisine est supérieure à la première qualité de réception mesurée par la station de base d'un certain seuil.

7. Procédé de communication selon la revendication 6, dans lequel les étapes de génération, réception et prédiction sont exécutées en plus pour chaque station parmi une ou plusieurs stations de base voisines supplémentaires, dans lequel lorsqu'une pluralité de stations de base voisines satisfont une condition étant que la seconde qualité de réception prédite de la station de base voisine est supérieure à la première qualité de réception mesurée par la station de base d'un certain seuil, une station parmi la pluralité de stations de base voisines est sélectionnée en tant que station de base vers laquelle le dispositif terminal doit effectuer un transfert intercellulaire, sur la base de l'énergie, de la capacité ou de la vitesse de la pluralité des stations de base voisines.

8. Procédé de communication selon l'une quelconque des revendications 1 à 6, dans lequel le premier seuil est prédéfini sur la base d'au moins un élément parmi un rayon d'une cellule, une puissance de transmission, un environnement de propagation d'ondes électromagnétiques et une exigence sur un rapport signal sur interférence.

9. Procédé de communication selon la revendication 4 ou 6, dans lequel le certain seuil est prédéfini sur la base d'au moins un élément parmi un rayon d'une cellule, une puissance de transmission, un environnement de propagation d'ondes électromagnétiques et une exigence sur un rapport signal sur interférence, ainsi que l'expérience et la préférence d'un opérateur.

10. Dispositif de station de base (2300) comprenant des circuits de traitement (2320) configurés pour exécuter le procédé de communication selon l'une quelconque des revendications 1 à 9.

11. Procédé de communication exécuté par une station de base (2300), comprenant :

la mesure (S302) d'une première qualité de réception d'un signal de référence en liaison montante diffusé par un dispositif terminal (2500) lors de la réception d'un message initial provenant d'une station de base voisine ;
la génération (S303) d'un message de réponse indiquant la première qualité de réception mesurée et la transmission du message de réponse à la station de base voisine lorsque ladite première qualité de réception mesurée est supérieure à un second seuil prédéfini, ledit procédé étant **caractérisé par** :

l'augmentation (S307) dudit second seuil prédéfini ;
la mesure (S308) de la première qualité de réception du signal de référence en liaison montante après l'augmentation du second seuil ; et
la transmission (S309) d'un message de réponse lorsque la première qualité de réception mesurée est supérieure au second seuil augmenté, dans lequel le message de réponse est en réponse à un message de notification provenant de la station de base voisine,
dans lequel le message initial indique qu'une seconde qualité de réception du signal de référence en liaison montante mesurée par la station de base voisine est inférieure à un premier seuil, dans lequel le message de notification indique qu'une seconde qualité de réception du signal de référence en liaison montante mesurée par la station de base voisine est inférieure à un premier seuil diminué.

12. Procédé de communication selon la revendication 11, comprenant en outre :

l'augmentation du second seuil un certain nombre de fois, et la mesure de la première qualité de réception du signal de référence en liaison montante à chaque fois que le second seuil est augmenté ; et
la génération et la transmission du message de réponse ledit nombre de fois.

13. Procédé de communication selon la revendication 12, dans lequel l'augmentation du second seuil comprend l'augmentation du second seuil par une seconde valeur prédéterminée à chaque fois,
dans lequel la seconde valeur prédéterminée est définie sur la base d'une vitesse du dispositif terminal.

**Figure 1**

base station B

base station A
(source base station)

uplink reference signal

UE

**Figure 2**

base station B                    base station A                         UE

S210
broadcasting uplink
reference signal

S220                                          S220
measuring uplink                   measuring uplink
reference signal                    reference signal

S230
performing
handover decision

S240  handover request and
response

S250      Layer 3 configuration

S260    establishing synchronization

**Figure 3**

|  | source base<br>station A | candidate target<br>base station B |
| --- | --- | --- |

S300
setting initial threshold S

S300
setting initial threshold T

S301
triggering broadcast of
message Msg1 when
$X_A < S$

S302
performing uplink
measurement

S303
triggering transmission
of response message
Msg2 when $X_B > T$

S304
decreasing the threshold
by $\Delta S$

S307
increasing the threshold
by $\Delta T$

S305
performing uplink
measurement

S308
performing uplink
measurement

S306
triggering broadcast of
message Msg3 when
$X_A < S - k^* \Delta S$

S309
triggering transmission of
response message Msg4 when
$X_B > T + k^* \Delta T$

S310
$X_{A,current} < X_{B,current} - O?$

No

Yes

S311
determining to handover to
base station B

**Figure 4**

**Figure 5**

**Figure 6**

**Figure 7**

source base
station A

candidate target
base station B

S700

setting initial threshold
S

S700

setting initial threshold
D

S701

triggering broadcast of
message Msg1 when $X_A$<S

S702

performing uplink measurement,
calculating a change rate for the
measurement result

S703

triggering transmission of
response message Msg2 when an
amount of change in the change
rate for the measurement result is
greater than D

S704

predicting a
measurement result of
the base station B

S705

No

the predicted measurement result of
the base station B > the current
measurement result of the base
station A + O ?

Yes

S706

determining to handover to
base station B

**Figure 8**

**Figure 9**

2300

2310    2310

2320

2325

wireless communication
interface

2327          2326

RF          BB

2327          2326

RF          BB

2321

controller

2324

2323          2322

network
interface          memory

**Figure 10**

**Figure 11**

```
    CPU              ROM              RAM
    1101             1102             1103
```

1104

input/output interface   1105

```
input unit    output unit   storage unit   communication    driver
  1106          1107          1108          unit 1109         1110
```

1100

removable medium
1111

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1740007 A
- WO 9731487 A
- US 6321089 B
- WO 2017074230 A